# EUROPÄISCHE PATENTSCHRIFT

(11) **EP 0 436 789 B1**
(45) Veröffentlichungstag und Bekanntmachung des Hinweises auf die Patenterteilung: **10.03.1993**
(21) Anmeldenummer: 90120667.2
(22) Anmeldetag: 29.10.1990
(51) Int. Cl.: A01B 45/02

(54) **Tennenplatz- oder Rasenflächenpflegegerät**
Regenerator apparatus for threshing floor, meadows or lawns
Dispositif régénérateur d'une aire ou d'un gazon

(30) Priorität: 14.11.1989 DE 3937785
(43) Veröffentlichungstag der Anmeldung: 17.07.1991
(73) Patentinhaber: Amazonen-Werke H. Dreyer GmbH & Co. KG, D-49205 Hasbergen (DE)
(72) Erfinder: Pfisterer, Thomas, W-6670 St. Ingbert (DE)

(56) Entgegenhaltungen:
- EP-A- 0 098 393
- CH-A- 349 436
- DE-A- 2 459 726
- DE-A- 3 629 848
- DE-C- 227 114
- FR-A- 2 209 487
- US-A- 1 414 880

## Beschreibung

Die Erfindung betrifft ein Gerät für Tennenplatzpflege, Grassaat- und /oder Grasnachsaatbettbereitnung und/oder zum Vertikutieren von Grasflächen, also zur Grasflächenpflege gemäß Oberbegriff des Patentanspruches 1.

Durch die deutsche Offenlegungsschrift 24 59 726 ist eine Maschinenkombination zur Aussaat von Grassamen bekannt. Diese Maschinenkombination besteht aus einer Rüttelegge, einer hinter der Rüttelegge angeordneten Nachlaufwalze sowie einem auf der Nachlaufwalze aufgebauten Sägerät. Die an den Eggenbalken der Rüttelegge angeordneten Zinken sind starr ausgebildet, wobei an dem hinteren Eggenbalken der Rüttelegge zwischen den starren Zinken zusätzlich elastisch bewegbare Zinken angeordnet sind. Mittels dieser Maschinenkombination kann in einem Arbeitsgang der Boden durch die starren Zinken der Rüttelegge gekrümmelt und zu einem Saatbett bereitet werden. Hierzu dringen die starren Zinken und die elastischen Zinken 8 - 15 cm in den Boden ein.

Diese bekannte Maschinenkombination eignet sich nur zur Grasneueinsaat.

Diese Maschinenkombination ist nicht zum Vertikutieren von Grasflächen geeignet. Auch ist sie nicht dazu geeignet, Gras in bestehende Rasenflächen nachzusäen, ohne die Grasnabe nachhaltig zu zerstören.

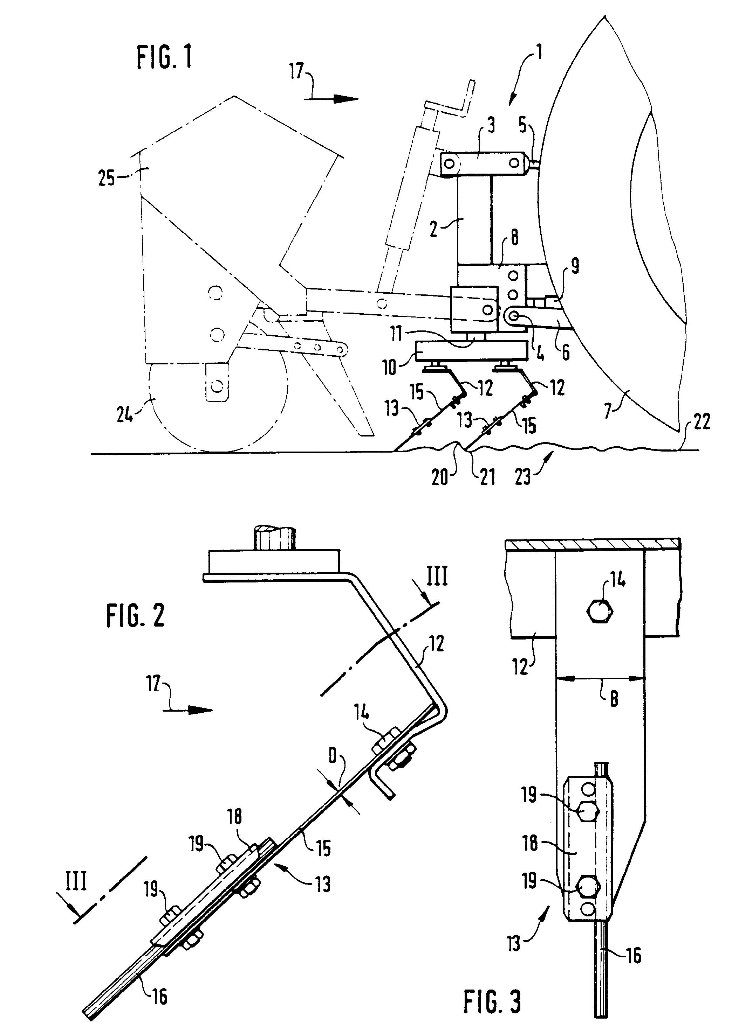

Durch die deutsche Offenlegungsschrift 36 29 848 ist eine Rüttelegge zur landwirtschaftlichen Saatbettbereitung bekannt. Die Zinken der Rüttelegge sind als Blattfedern ausgebildet und weisen quer zur Fahrtrichtung eine wesentlich größere Querschnittslänge als in Fahrtrichtung auf, wobei die Zinken gemäß dem Ausführungsbeispiel nach Fig. 3 schleppend angeordnet sein können. Diese federnden Blattfederzinken sind auch in Fahrtrichtung bzw. entgegen der Fahrtrichtung gesehen in ihrer Federwirkung relativ steif ausgebildet. Dies wird zusätzlich noch dadurch verstärkt, daß die Blattfederzinken eine Profilierung aufweisen. Diese Rütteleggenzinken sind trotz ihrer Federung derart starr ausgebildet, daß sie 8 - 15 cm tief in den Boden eindringen und den Boden zerkrümmeln und so zu einem Saatbett bereiten können. Zur Tennenplatzpflege bzw. zur Grasnachsaatbettbereitung und zum Vertikutieren von Grasflächen, also zur Grasflächenpflege und Rasenpflege, eignet sich diese bekannte Rüttelegge jedoch nicht.

Der Erfingung liegt die Aufgabe zugrunde, auf einfache Weise ein für die Tennen- und Grasflächenpflege sowie Grasnachsaat universell einsetzbares Gerät zu schaffen. Hierzu werden die im Patentanspruch 1 beschriebenen Maßnahmen vorgeschlagen.

Dieses Gerät besteht somit aus einer Art Rüttelegge mit speziell gefederten Zinken, die eine Kombination von einer dünnen Blattfeder und einem Stift, vorzugsweise einen runden Federstahlstab, sind. Diese neuartigen Bodenbearbeitungselemente sind somit Federzinkenelemente, die in der oben beschriebenen Anordnung folgende Arbeitsmethode in hervorragender Weisen gewährleisten: In der Hauptarbeitsrichtung, also quer zur Fahrtrichtung sind die Bearbeitungselemente sehr steif und arbeiten damit aggressiv. Die Blattfeder hingegen sorgt dafür, daß der Stift, der das Hauptarbeitselement ist, Bodenunebenheiten und kleinen Hindernissen in vertikaler Richtung ausweicht. Außerdem kann der Stift in hervorragender Weise sämtlichen Unebenheiten der Bodenoberfläche folgen, d. h. er geht auch in Vertiefungen hinein. Jedoch weicht der Stift seitlich nicht aus und kann so vertikultierartig arbeiten. Kleine Steine werden zur Seite geschoben und beeinträchtigen das Arbeitsergebnis nicht nachteilig. Insbesondere ist es mit diesem Gerät in hervorragender Weise möglich, eine bestehende, insbesondere verfilzte Grasnabe aufzulockern bzw. zu vertikutieren, wobei gesundes, festverwurzeltes Gras nicht beschädigt wird, sondern nur lose Erde, Moos etc. innerhalb der Grasnabe aufgelockert wird. Diese Bodenbearbeitungselemente folgen in Art eines Kehrbesens mit extrem dünnen, blattfederartigen Zinkenelementen, wie er als Handarbeitsgerät in der Rasen- und Gartenpflege bekannt ist, der Kontur der Bodenoberfläche. Selbst auf Erhebungen wird festverwurzeltes Gras durch diese erfindungsgemäße Ausbildung nicht vollkommen ausgerissen, so daß diese Grasnabe nicht beschädigt, sondern gesund gehalten wird. Vielmehr arbeitet dieses Gerät striegelartig auf und an der Oberfläche der Grasnabe. Die Erde sowie die Grasnabe wird nur im oberflächennahen Bereich an der Oberfläche gelockert. Auch läßt sich dieses Gerät für die Tennenplatzpflege einsetzen.

Eine hervorragende Arbeit, insbesondere zum Vertikutieren von Grasflächen, also zur Grasflächenpflege, sowie zur Grasnachsaatbettbereitung wird dadurch erreicht, daß die Blattfeder mit dem Stift striegelartig ausgebildet ist, und zwar derart, daß sie jeweils leicht evtl. Bodenunebenheiten folgen können. Dieses wird noch dadurch unterstützt, daß die Blattfeder eben und ohne Profilierung ausgeführt ist. Damit die Blattfeder den oben beschriebenen Effekt gewährleitstet, ist vorgesehen, daß die Blattfeder eine Dicke von max. 4 mm, vorzugsweise 2-3 mm aufweist. Eine sehr gute Arbeit ergibt sich dadurch, daß die Blattfeder quer zur Fahrtrichtung steif ausgebildet ist, während entgegen der Fahrtrichtung gesehen die Federkonstante der Blattfeder gering und derart ausgelegt ist, daß beim Folgen der Erhebungen durch die Stifte, die Stifte mit zumindest annähernd gleichen Anpressdruck gegen die Bodenoberfläche von der Blattfeder gedrückt werden.

Um einen Verschleiß der Stifte ausgleichen und um gleichzeitig eine gleichmäßige Bearbeitung der zu bearbeitenten Fläche über die gesamte Arbeitsbreite der Maschine erreichen zu können, ist erfindungsgemäß vorgesehen, daß der Stift in seiner Längsrichtung verstellbar an dem Halter angeordnet ist.

Um gleichzeitig bei dem Vertikutieren sowie bei der Grasflächenpflege evtl. auch eine Grasnachsaat durchführen zu können, ist hinter dem Gerät eine gegenüber dem Gerät höhenverstellbare Walze angeordnet, die das von den Stiften gelockerte Erdreich wieder andrückt. Eine gleichzeitige Grasnachsaat läßt sich dadurch erreichen, daß auf dem Gerät ein Sägerät angeordnet ist, welches Grassamen auf den Boden streut. Somit wird in Verbindung mit einem Saatkasten zum Ausbringen von Gras in Breitsaat und einer Walze, die gelockerte und mit dem Saatgut vermischte, lose Erde von der Walze angedrückt. Das Ausbringen des Grassamens in Breitsaat soll vor allem in einer vorhandenen Grasnabe geschehen, wobei diese nicht beschädigt wird. Das Gerät ist also in hervorragender Weise als Nachsaatgerät einzusetzen.

Wenn nur ein Vertikultiereffekt erreicht werden soll, ist es möglich, an dem Gerät Stützräder zur Höhenführung anzuordnen.

Weitere Einzelheiten der Erfindung sind den übrigen Unteransprüchen, der Beispielsbeschreibung und den Zeichnungen zu entnehmen. Hierbei zeigt
Fig. 1 ein erfindungsgemäß ausgebildetes Gerät in der Seitenansicht,
Fig. 2 die Anordnung eines der Bearbeitunsgelemente an einem der Querbalken des Gerätes gemäß Fig. 1 in der Seitenansicht und im größeren Maßstab,
Fig. 3 ein an dem Querbalken angeordnetes Bearbeitungselement in der Ansicht III-III

Das Gerät 1 ist rütteleggenartig ausgebildet und weist den Rahmen 2 auf. An dem Rahmen 2 befindet sich das obere Dreipunkt-Kupplungselement 3 sowie die beiden unteren Dreipunkt-Kupplungselemente 4, über die das Gerät 1 an dem Oberlenker 5 und den beiden Unterlenkern 6 des Dreipunkt-Krafthebers des Schleppers 7 angekuppelt ist. Desweiteren ist an dem Rahmen 2 der Schwingungsantriebsmechanismus 8 angeordnet, der über eine Gelenkwelle 9 von dem Schlepper 7 angetrieben wird. An dem Rahmen 2 sind mehrere Schwingen 10 quer zur Fahrtrichtung gelagert. Diese Schwingen 10 werden über die Ausgangswelle 11 des Schwingungsantriebes 8 in hin- und hergehende Bewegungen versetzt. An den Schwingen 10 sind zwei hintereinanderliegende Querbalken 12 angeschraubt. An dem Eggenbalken 12 sind in Abständen zueinander die zinkenartigen Bearbeitungselemente 13 mittels der Schrauben 14 an den Querbalken 12 angeordnet. Die zinkenartigen Bearbeitungselemente 13 bestehen jeweils aus einem als Blattfeder ausgebildeten Halter 15 und einem an den Halter 15 befestigten Stift 16. Der Halter 15 und der Stift 16 sind bezogen auf die Fahrtrichtung 17 des Gerätes 1 schleppend angeordnet. Der Stift 16 ist als Rundstab ausgebildet und mittels der Schelle 18 und den Schrauben 19 an dem Halter 15 nachstellbar festgeklemmt.

Der Halter 15 ist mit dem Stift 16 striegelartig ausgebildet, und zwar derart, daß der Stift 16 leicht Bodenunebenheiten folgen kann. Der als Blattfeder ausgebildete Halter 15 weist quer zur Fahrtrichtung 17 eine wesentlich größere Breite B als Dicke D auf, so daß das Federkonstantenverhältnis mindestens 1 : 50 beträgt. Der Halter 15 ist eben und ohne Profilierungen ausgeführt. Der Halter 15 weist eine Dicke D von max. 4 mm, vorzugsweise von etwa 2-3 mm auf.

Der als Blattfeder ausgebildete Halter 15 ist quer zur Fahrtrichtung 17 steif ausgebildet, während entgegen der Fahrtrichtung 17 gesehen die Federkonstante des Halters 15 gering und derart ausgelegt ist, daß beim Folgen der Erhebungen 20 und Vertiefungen 21 durch die Stifte 16 die Stifte mit zumindest annähernd gleichem Anpressdruck gegen die von den Erhebungen 20 und Vertiefungen 21 sowie der ebenen Fläche 22 gebildeten Oberfläche 23 gedrückt werden.

Hinter dem Gerät 1 läßt sich eine mit mit strichpunktierten Linien angedeutete Walze 24 höhenverstellbar anordnen. Desweiteren ist es möglich, auf oder an dem Gerät 1 oder auf der Nachlaufwalze 24 ein ebenfalls mit strichpunktierten Linen angedeutetes Sägerät 25 anzuordnen.

Die Funktionsweise des Gerätes ist folgende:
Das an dem Dreipunktkraftheber des Ackerschleppers 7 angeordnete Gerät wird über die Bodenoberfläche 23 in Fahrtrichtung 17 gezogen. Über den von der Gelenkwelle 9, der Zapfwelle des Schleppers 7 und dem Schwingungsantriebsmechanismus 8 in hin- und hergehende Bewegungen angetriebenen Bearbeitungselementen 13 wird die Oberfläche 23 des Bodens bearbeitet. Durch die Anordnung der Stifte 16 an den als Blattfeder ausgebildeten Halter 15 kann das untere Ende des Stiftes 16 den Vertiefungen 21, den Erhebungen 20 sowie der ebenen Fläche der Bodenoberfläche 23 folgen. Dadurch, daß der als Blattfeder ausgebildete Halter 15 quer zur Fahrtrichtung sehr steif ist, werden lose Erde, Moos und loses Gras innerhalb der Grasnabe aufgelockert und aus dem Boden wie beim vertikultieren herausgegerissen. Hierdurch wird eine gesunde und eine Gesundung der Grasnabe erreicht. Die Stifte 16 führen eine alternierende Bewegung quer zur Fahrtrichtung aus, wie die Zinken einer Rüttelegge. Die Stifte 16 arbeiten aufgrund der Anordnung an den als dünne Blattfedern ausgebildete Haltern 15 nur an der Oberfläche der zu bearbeitenden Fläche, beispielsweise Rasenfläche, und dringen nicht sehr tief in den Boden ein. Auf diese Weise wird in überraschend einfacher Weise ein sehr guter Vertikultiereffekt einer Grasnabe erreicht. Gleichzeitig werden unebene Grasflächen etwas geebnet.

## Patentansprüche

1. Gerät für Tennenplatzpflege, Grassaat- und/oder Grasnachsaatbettbereitung und/oder zum Vertikutieren von Grasflächen, also zur Grasflächenpflege, bestehend aus einem oder mehreren quer zur Fahrtrichtung hin- und hergehende Bewegungen motorisch angetriebenen und mit zinkenartigen Bearbeitungselementen (13) besetzten Querbalken (12), wobei die Bearbeitungselemente (13) jeweils aus einem als Blattfeder ausgebildeten und an dem Querbalken (12) befestigten Halter (15) und einem an dem Halter (15) angeordneten und die Erde bearbeitenden Stift (16) bestehen, wobei zumindest der untere Teil des Halters (15) und der Stift (16), bezogen auf die Fahrtrichtung (17) des Gerätes (1), schleppend angeordnet sind.

2. Gerät nach Anspruch 1, dadurch gekennzeichnet, daß die Blattfeder (15) mit dem Stift (16) striegelartig ausgebildet ist, und zwar derart, daß sie jeweils leicht evtl. Bodenunebenheiten folgen können.

3. Gerät nach einem oder mehreren vorstehenden Ansprüchen, dadurch gekennzeichnet, daß die Blattfeder (15) eine wesentlich größere Breite (B) (quer zur Fahrtrichtung) als Dicke (D) (in Fahrtrichtung) aufweist, so daß das Federkonstantenverhältnis mindestens 1 : 50 beträgt.

4. Gerät nach einem oder mehreren vorstehenden Ansprüchen, dadurch gekennzeichnet, daß die Blattfeder (15) eben und ohne Profilierungen ausgeführt ist.

5. Gerät nach einem oder mehreren vorstehenden Ansprüchen, dadurch gekennzeichnet, daß die Blattfeder (15) eine Dicke (D) von max. 4 mm, vorzugsweise 2 - 3 mm aufweist.

6. Gerät nach einem oder mehreren vorstehenden Ansprüchen, dadurch gekennzeichnet, die Blattfeder (15) quer zur Fahrtrichtung (17) steif ausgebildet ist, während entgegen der Fahrtrichtung (17) gesehen die Federkonstante der Blattfeder (15) gering und derart ausgelegt ist, daß beim Folgen der Erhebungen durch die Stifte (16) die Stifte (16) mit zumindest annähernd gleichen Anpressdruck gegen die Bodenoberfläche (23) gedrückt werden.

7. Gerät nach einem oder mehreren vorstehenden Ansprüchen, dadurch gekennzeichnet, daß der Stift (16) in seiner Längsrichtung verstellbar an dem Halter (15) angeordnet ist.

8. Gerät nach einem oder mehreren vorstehenden Ansprüchen, dadurch gekennzeichnet, daß die Blattfedern (15) mit dem jeweils ihm zugeordneten Stift (16) die Bodenoberfläche (23) striegel- und/oder kehrartig bearbeiten.

9. Gerät nach einem oder mehreren vorstehenden Ansprüchen, dadurch gekennzeichnet, daß hinter dem Gerät (1) eine gegenüber dem Gerät (1) höhenverstellbare Walze (24) angeordnet ist.

10. Gerät nach einem oder mehreren vorstehenden Ansprüchen, dadurch gekennzeichnet, daß auf dem Gerät (1) ein Sägerät (25) angeordnet ist.

11. Gerät nach einem oder mehreren der vorstehenden Ansprüche, dadurch gekennzeichnet, daß dünne Blattfedern (15) verwendet werden.

## Claims

1. Apparatus for tending threshing floors, preparing beds of grass and/or beds of resown grass and/or for scarifying grass areas, that is to say for tending grass areas, including one or a plurality of cross-beams (12), which are motor-driven with reciprocating movements transversely relative to the direction of travel and are fitted with tine-like cultivating members (13), the cultivating members (13) each comprising a holder (15), which forms a plate spring and is mounted on the cross-beam (12), and a pin (16), which is disposed on the holder (15) and cultivates the ground, at least the lower portion of the holder (15) and the pin (16) being disposed in a trailing-like manner relative to the direction of travel (17) of the apparatus (1).

2. Apparatus according to claim 1, characterised in that the plate spring (15) and the pin (16) are provided in a rake-like manner, such that they can each easily follow any uneven parts of the ground.

3. Apparatus according to one or more of the preceding claims, characterised in that the plate spring (15) has a substantially greater width (B) (transversely relative to the direction of travel) than thickness (D) (when viewed with respect to the direction of travel), so that the resilience constant ratio is at least 1 : 50.

4. Apparatus according to one or more of the preceding claims, characterised in that the plate spring (15) is flat and has no profiling.

5. Apparatus according to one or more of the preceding claims, characterised in that the plate spring (15) has a maximum thickness (D) of 4 mm, preferably 2 - 3 mm.

6. Apparatus according to one or more of the preceding claims, characterised in that the plate spring (15) is rigid transversely relative to the direction of travel (17), while, when viewed oppositely to the direction of travel (17), the resilience constant of the plate spring (15) is low, such that, when the raised parts are followed by means of the pins (16), the pins (16) are urged towards the ground surface (23) with at least an approximately identical compression pressure.

7. Apparatus according to one or more of the preceding claims, characterised in that the pin (16) is disposed on the holder (15) so as to be adjustable in its longitudinal direction.

8. Apparatus according to one or more of the preceding claims, characterised in that the plate springs (15) cultivate the ground surface (23) in a rake-like and/or sweeper-like manner using the respective pin (16) associated therewith.

9. Apparatus according to one or more of the preceding claims, characterised in that a roller (24), which is vertically adjustable relative to the apparatus (1), is disposed behind the apparatus (1).

10. Apparatus according to one or more of the preceding claims, characterised in that a sowing apparatus (25) is disposed on the apparatus (1).

11. Apparatus according to one or more of the preceding claims, characterised in that thin plate springs (15) are used.

## Revendications

1. Appareil pour l'entretien d'aires de terre battue, pour la préparation de lits d'ensemencement de gazon et/ou d'ensemencement complémentaire de gazon et/ou pour la scarification de surfaces herbeuses, c'est-à-dire pour l'entretien de surfaces herbeuses, appareil composé d'une ou plusieurs poutres transversales (12) entraînées par moteur suivant des mouvements alternatifs et garni d'éléments d'outil (13) en forme de dents, ces éléments d'outil (13) étant formés chaque fois d'un ressort-lame et d'un support (15) fixé à la poutre transversale (12) ainsi que d'une tige (16) reliée au support (15) et travaillant le sol, au moins la partie inférieure du support (15) et de la tige (16) étant montée de manière tirée par rapport à la direction de déplacement (17) de l'appareil (1).

2. Appareil selon la revendication 1, caractérisé en ce que le ressort-lame (15) et la tige (16) sont réalisés en forme d'étrille de façon à suivre facilement les éventuelles irrégularités du sol.

3. Appareil selon une ou plusieurs des revendications précédentes, caractérisé en ce que le ressort-lame (15) à une largeur (B) beaucoup plus importante (largeur prise dans la direction transversale à la direction de déplacement) que l'épaisseur (D) (prise dans la direction de déplacement) pour que le rapport des constantes de ressort soit au moins de 1 à 50.

4. Appareil selon une ou plusieurs des revendications précédentes, caractérisé en ce que le ressort-lame (15) est plat et ne comporte pas de profil.

5. Appareil selon une ou plusieurs des revendications précédentes, caractérisé en ce que le ressort-lame (15) a une épaisseur (D) au maximum égale 4 mm et de préférence de 2 à 3 mm.

6. Appareil selon une ou plusieurs des revendications précédentes, caractérisé en ce que le ressort-lame est rigide transversalement à la direction de déplacement (17) alors que vu dans la direction opposée à la direction de déplacement (17), la constante de ressort du ressort-lame (15) est faible et est conçue pour que lorsque les tiges (16) suivent les bosses, les tiges (16) sont appliquées contre la surface (23) du sol avec sensiblement pratiquement la même pression.

7. Appareil selon une ou plusieurs des revendications précédentes, caractérisé en ce que la tige (16) est montée réglable dans la direction longitudinale sur le support (15).

8. Appareil selon une ou plusieurs des revendications précédentes, caractérisé en ce que les ressorts lames (15) et les tiges (16) associées travaillent la surface (23) du sol à la manière d'une étrille et/ou d'un balai.

9. Appareil selon une ou plusieurs des revendications précédentes, caractérisé par un rouleau (24) placé derrière l'appareil et dont la hauteur est réglable par rapport à l'appareil (1).

10. Appareil selon une ou plusieurs des revendications précédentes, caractérisé en ce que l'appareil (1) est équipé d'un semoir (25).

11. Appareil selon une ou plusieurs des revendications précédentes, caractérisé par de minces ressorts lames (15).
